# EUROPÄISCHE PATENTSCHRIFT

(11) **EP 1 170 084 B1**
(45) Veröffentlichungstag und Bekanntmachung des Hinweises auf die Patenterteilung: **16.03.2005**
(21) Anmeldenummer: 01114316.1
(22) Anmeldetag: 13.06.2001
(51) Int. Cl.: B23K 26/06, B23K 26/20, B23K 26/38, H01S 3/08

(54) **Laseranordnung für die Materialbearbeitung**
Laser device for material machining
Dispositif d'usinage par laser de matériaux

(30) Priorität: 07.07.2000 DE 10033071
(43) Veröffentlichungstag der Anmeldung: 09.01.2002
(73) Patentinhaber: TRUMPF LASERTECHNIK GmbH, D-71254 Ditzingen (DE)
(72) Erfinder: Schlüter, Holger, West Hartford, CT 06107 (US)
(74) Vertreter: Kohler Schmid Möbus

(56) Entgegenhaltungen:
- EP-A- 0 463 500
- EP-A- 0 623 979
- EP-A- 0 695 599
- WO-A-00/36650
- WO-A-00/50198
- WO-A-01/22131
- US-A- 5 878 067

## Beschreibung

Die Erfindung betrifft eine Laseranordnung für die Materialbearbeitung mit einer Einrichtung zur Erzeugung eines linear polarisierten Laserstrahls, mit wenigstens einer Verzögerungsplatte zur Erzeugung eines polarisierten Laserstrahls mit rotierendem Polarisationsvektor, insbesondere zur elliptischen oder zirkularen Polarisation des Laserstrahls sowie mit einer Einrichtung zur Formung des Laserstrahls mit wenigstens einem optischen Element zur Strahlformung, wobei der Verzögerungsplatte im Strahlengang des Laserstrahls zumindest ein optisches Element vorgeschaltet ist und die Verzögerungsplatte sowie die Polarisationsebene des auf diese auftreffenden linear polarisierten Laserstrahls relativ zueinander definiert ausgerichtet sind (siehe, z.B., WO-A-00/36650).

Im Falle der Materialbearbeitung, beispielsweise des Schneidens oder Schweißens mit linear polarisierten Laserstrahlen ist das Bearbeitungsergebnis abhängig von der Bearbeitungsrichtung. Zur Abschwächung bzw. zur Vermeidung dieser Abhängigkeit sind an bekannten Laseranordnungen Einrichtungen zur Erzeugung eines polarisierten Laserstrahls mit rotierendem Polarisationsvektor, vorzugsweise zur elliptischen oder zirkularen Polarisation des Laserstrahls vorgesehen. Eine derartige Laseranordnung mit einer λ/4-Platte als Verzögerungsplatte zur zirkularen Polarisation eines linear polarisierten Laserstrahls wird offenbart durch EP 0 591 541 B. Die Polarisationsebene des auf die λ/4-Platte auftreffenden linear polarisierten Laserstrahls ist dabei unter einem Winkel von 45° gegen die Reflexionsebene der Verzögerungsplatte geneigt. Die genannte 45° Neigung wird bewirkt mittels einer der λ/4-Platte im Strahlengang des Laserstrahls vorgeschalteten Spiegelanordnung im Innern des vorbekannten Laserresonators.

An bekannten Laseranordnungen für die Materialbearbeitung ebenfalls vorgesehen sind Einrichtungen zur Formung, insbesondere zur Aufweitung des erzeugten Laserstrahls in Form von sogenannten Strahlteleskopen. Diese dienen dazu, den Divergenzwinkel des Laserstrahls bei verhältnismäßig großer Laserstrahllänge relativ klein zu halten. Dadurch wiederum wird die Möglichkeit geschaffen, den Laserstrahl mit geringen Verlusten nahe der Bearbeitungsstelle auf das dort üblicherweise vorgesehene optische Element zur Strahlfokussierung auftreffen zu lassen und auf das zu bearbeitende Werkstück zu bündeln. Eine Laseranordnung mit Strahlteleskop ist beispielsweise beschrieben in EP 0 428 734 A.

Eine gattungsgemäße Laseranordnung ist offenbart in WO-A-00/36650. Zur Erzeugung eines polarisierten Laserstrahls mit rotierendem Polarisationsvektor dient im Falle des Standes der Technik eine "polarization conversion unit". Dieser ist im Strahlengang des Laserstrahls eine als "beam shaping unit" bezeichnete und ausschließlich als solche verwendete Einrichtung zur Formung des Laserstrahls vorgeschaltet.

Ausgehend von dem gattungsbildenden Stand der Technik liegt der vorliegenden Erfindung die Aufgabe zugrunde, die Anzahl der optischen Elemente zu reduzieren, die im Falle einer für die Materialbearbeitung bestimmten und mit einer Einrichtung zur Formung des Laserstrahls versehenen Laseranordnung benötigt werden.

Erfindungsgemäß gelöst wird diese Aufgabe durch die Laseranordnung nach Patentanspruch 1. Da im Falle der Erfindung wenigstens ein optisches Element zur Strahlformung zusätzlich als Verzögerungsplatte dient und/oder wenigstens ein optisches Element zur Strahlformung auch zur definierten Ausrichtung der Polarisationsebene des linear polarisierten Laserstrahls gegenüber der Verzögerungsplatte genutzt wird, sind an einer derartigen Laseranordnung optische Elemente in einer lediglich verhältnismäßig geringen Anzahl in den Weg des Laserstrahls einzuschalten. Dieser Umstand wirkt sich in mehrerlei Hinsicht vorteilhaft aus. So sind erfindungsgemäße Laseranordnungen beispielsweise verhältnismäßig klein bauend und aufgrund ihrer relativ einfachen konstruktiven Gestaltung kostengünstig. Nachdem an optischen Elementen zur Formung bzw. zur Polarisation des erzeugten Laserstrahls stets Leistungsverluste auftreten und nachdem optische Elemente der genannten Art grundsätzlich Fehlerquellen etwa bei der zweckentsprechenden Führung des Laserstrahls darstellen, reduzieren sich im Falle der Erfindung mit der Anzahl der vorgesehenen optischen Elemente auch die auftretenden Leistungsverluste sowie die bestehenden Fehlerquellen bei der Strahlführung. Die optischen Elemente mit Doppelfunktion besitzen die funktionsnotwendigen Eigenschaften derjenigen herkömmlichen optischen Elemente, deren Funktionen sie in sich vereinen.

Bevorzugte Bauarten der Laseranordnung nach Patentanspruch 1 ergeben sich aus den abhängigen Patentansprüchen 2 bis 5.

Patentanspruch 2 beschreibt eine einfache und platzsparende Möglichkeit zur definierten Ausrichtung der Polarisationsebene des linear polarisierten Laserstrahls gegenüber der den Laserstrahl zirkular polarisierenden Verzögerungsplatte der betreffenden Erfindungsbauart.

Die kennzeichnenden Merkmale der Patentansprüche 3 und 5 tragen der Tatsache Rechnung, dass im Falle erfindungsgemäßer Laseranordnungen für die Materialbearbeitung in aller Regel Laserstrahlen mit verhältnismäßig hohen Leistungen nach ihrer Erzeugung der Bearbeitungsstelle zuzuführen sind.

Das kennzeichnende Merkmal von Patentanspruch 4 ist vorzugsweise an erfindungsgemäßen Laseranordnungen realisiert, im Falle derer Laserstrahlen mit radialsymmetrischer Intensitätsverteilung zu führen sind.

Nachstehend wird die Erfindung anhand schematischer Darstellungen zu Ausführungsbeispielen näher erläutert. Es zeigen:
- Fig. 1: eine erste Bauart einer Laseranordnung mit Strahlteleskop und Verzögerungsplatte,
- Fig. 2: eine stark schematisierte Ansicht der Laseranordnung nach Fig. 1 in Richtung des Pfeils II in Fig. 1,
- Fig. 3: eine stark schematisierte Ansicht der Laseranordnung nach Fig. 1 in Richtung des Pfeils III in Fig. 1,
- Fig. 4: eine stark schematisierte Ansicht der Laseranordnung nach Fig. 1 in Richtung des Pfeils IV in Fig. 1,
- Fig. 5: eine zweite Bauart einer Laseranordnung mit Strahlteleskop und Verzögerungsplatte und
- Fig. 6: eine stark schematisierte Ansicht der Laseranordnung nach Fig. 5 in Richtung des Pfeils VI in Fig.5.

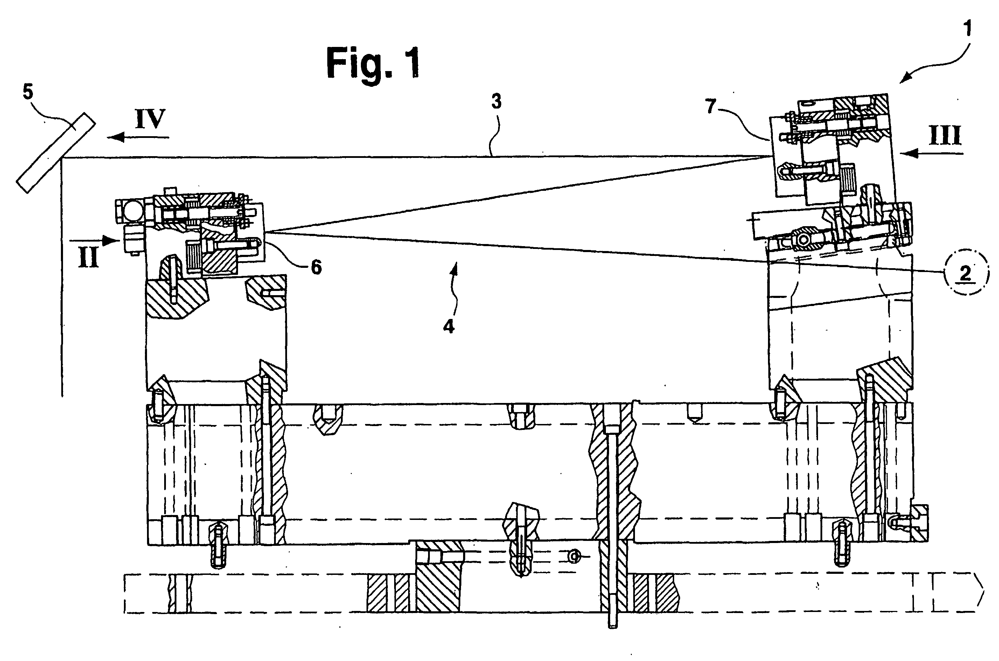

Ausweislich Fig. 1 weist eine Laseranordnung 1 als wesentliche Bestandteile einen Laserresonator 2 zur Erzeugung eines Laserstrahls 3, eine Einrichtung zur Formung des Laserstrahls 3 in Form eines Strahlteleskopes 4 sowie eine Verzögerungsplatte 5 auf. Bei dem Strahlteleskop 4 handelt es sich um ein kollimierendes Teleskop mit sphärischen Spiegeln 6, 7. Zum Einsatz kommen kann sowohl ein Kepler- als auch ein Galilei-Teleskop. Mittels der sphärischen Spiegel 6, 7 lassen sich Divergenz und Radius des Laserstrahls 3 funktionsgerecht einstellen.

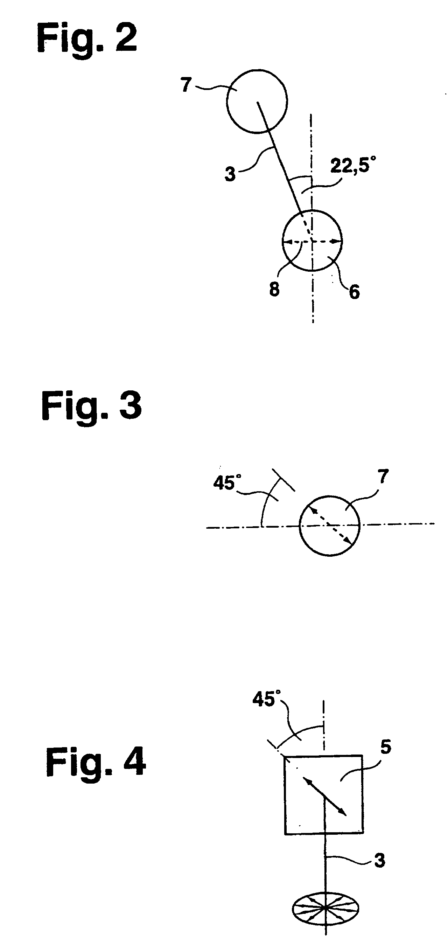

Der Laserresonator 2 ist herkömmlicher Bauart. Der von ihm emittierte Laserstrahl 3 besitzt eine radialsymmetrische Intensitätsverteilung und ist linear polarisiert. Wie in Fig. 2 durch einen Doppelpfeil 8 veranschaulicht, verläuft die Polarisationsebene des Laserstrahls 3 in dessen Ausbreitungsrichtung gesehen vor dem sphärischen Spiegel 6 in horizontaler Richtung.

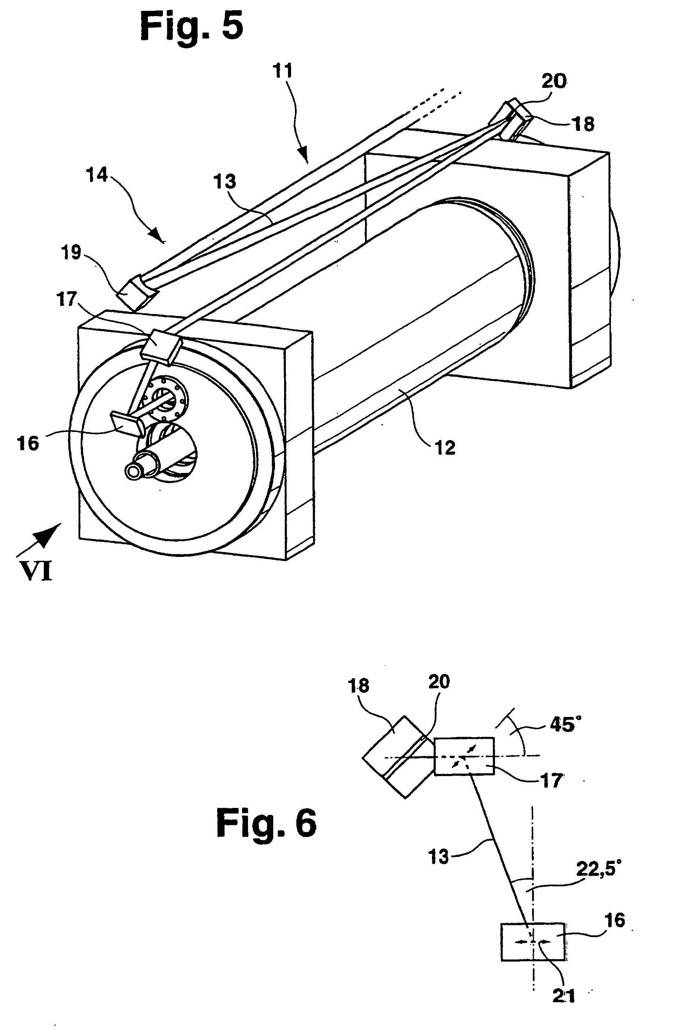

Mittels der sphärischen Spiegel 6, 7 wird der Laserstrahl 3 in der in Fig. 1 gezeigten Weise zweifach umgelenkt. Bei dieser zweifachen Umlenkung verläuft der Laserstrahl 3 in einer Ebene, die gegen die Senkrechte auf die Polarisationsebene des Laserstrahls 3 vor dem sphärischen Spiegel 6 um 22,5° geneigt ist (Fig. 2). Infolge der gezeigten doppelten Umlenkung des Laserstrahls 3 sowie der genannten Neigung der Ebene des doppelt umgelenkten Laserstrahls 3 gegenüber dessen Polarisationsebene vor dem sphärischen Spiegel 6 wird die anfänglich horizontal ausgerichtete Polarisationsebene des Laserstrahls 3 um 45° in die aus den Fign. 3 und 4 ersichtliche Lage gedreht. Mit dem in den Fign. 3 und 4 gezeigten Verlauf seiner Polarisationsebene wird der Laserstrahl 3 von dem sphärischen Spiegel 7 auf die Verzögerungsplatte 5 gelenkt. Mittels der sphärischen Spiegel 6, 7 wurde der Laserstrahl 3 zuvor zur Verkleinerung seines Divergenzwinkels in bekannter Weise aufgeweitet. Die sphärischen Spiegel 6, 7 dienen in dem dargestellten Beispielsfall dementsprechend als optische Elemente zur Strahlformung bzw. -aufweitung und gleichzeitig als optische Elemente zur definierten Ausrichtung der Polarisationsebene des linear polarisierten Laserstrahls 3 gegenüber der Verzögerungsplatte 5.

Bei der Verzögerungsplatte 5 handelt es sich um eine herkömmliche doppelbrechende Viertelwellenplatte, eine sogenannte "λ/4-Platte". Mittels der Verzögerungsplatte 5 wird der an ihr einfallende Laserstrahl 3 um 90° vertikal nach unten abgelenkt. Die Reflexionsebene der Verzögerungsplatte 5 verläuft dementsprechend in der Vertikalen.

Wie Fig. 4 veranschaulicht, ist die Polarisationsebene des Laserstrahls 3 zwischen dem sphärischen Spiegel 7 und der Verzögerungsplatte 5 um 45° gegen deren Reflexionsebene geneigt. Infolgedessen wird der zuvor linear polarisierte Laserstrahl 3 durch die Verzögerungsplatte 5 zirkular polarisiert. Auch die zirkulare Polarisation des von der Verzögerungsplatte 5 reflektierten Laserstrahls 3 ist in Fig. 4 angedeutet. Nachdem die Fign. 1 bis 4 den Laserstrahl 3 lediglich mit seiner Strahlachse zeigen, ist die Aufweitung des Laserstrahls 3 den genannten Abbildungen nicht zu entnehmen.

In bekannter Weise wird der aufgeweitete und zirkular polarisierte Laserstrahl 3 einer der Laseranordnung 1 im Strahlengang des Laserstrahls 3 nachgeschalteten Bearbeitungsstation zugeführt und dort mittels einer Fokussiereinrichtung auf die Bearbeitungsstelle an dem zu bearbeitenden Werkstück gebündelt.

Eine Laseranordnung 11, wie sie in den Fign. 5 und 6 dargestellt ist, umfasst einen Laserresonator 12 herkömmlicher koaxialer Bauart zur Erzeugung eines Laserstrahls 13 sowie ein Strahlteleskop 14 als Einrichtung zur Formung des Laserstrahls 13. Die einzelnen Bestandteile des Strahlteleskopes 14, nämlich Zylinderspiegel 16, 17, 18, 19, dienen als optische Elemente zur Strahlformung.

Der gezeigte Aufbau des Strahlteleskopes 14 ist dadurch bedingt, dass sich die Divergenz, die Erstreckung und auch die Intensitätsverteilung des von dem Laserresonator 12 emittierten Laserstrahls 13 in zwei senkrecht zueinander verlaufenden Achsrichtungen derart stark voneinander unterscheiden, dass die Verhältnisse in den beiden genannten Achsrichtungen voneinander getrennt anzupassen sind. Die Verhältnisse in einer der beiden Achsrichtungen werden durch einen instabilen Resonator, die Verhältnisse in der anderen Achsrichtung durch einen stabilen Resonator bewirkt.

Durch das Strahlteleskop 14 wird die beschriebene, in den beiden Achsrichtungen unterschiedliche Intensitätsverteilung in eine nahezu rotationssymmetrische Intensitätsverteilung umgewandelt. Dabei übernehmen die Zylinderspiegel 16, 19 die Strahlformung der instabilen Achse. Sie bilden dabei in dem gezeigten Beispielsfall ein Kepler-Teleskop. Die stabile Achse hingegen wird durch das ein Galilei-Teleskop bildende Zylinderspiegelpaar 17, 18 geformt. Zur Entfernung von Nebenmaxima in der instabilen Achse ist im Zwischenfokus des Kepler-Teleskops, d.h. der Zylinderspiegel 16, 19, ein herkömmlicher Raumfilter 20 vorgesehen.

Ausweislich Fig. 6 tritt der Laserstrahl 13 linear polarisiert und mit einer in der Horizontalen verlaufenden, durch einen Doppelpfeil 21 veranschaulichten Polarisationsebene aus dem Laserresonator 12 aus. Mit dieser Polarisation fällt der Laserstrahl 13 an dem Zylinderspiegel 16 ein, von welchem er unter einem Winkel von 90° auf den Zylinderspiegel 17 reflektiert wird. Die Reflexion des Laserstrahls 13 an dem Zylinderspiegel 17 erfolgt erneut unter einem Winkel von 90°. Ingesamt ergibt sich so im Bereich der Zylinderspiegel 16, 17 ein U-förmiger Verlauf des Laserstrahls 13. Dieser U-förmige Teil des Laserstrahls 13 liegt dabei in einer Ebene, die mit der Vertikalen, d.h. mit der Senkrechten auf die Polarisationsebene des Laserstrahls 13 vor dem Zylinderspiegel 16, einen Winkel von 22,5° einschließt.

Durch die zweimalige Reflexion des Laserstrahls 13 an den Zylinderspiegeln 16, 17 wird die Polarisationsebene des Laserstrahls 13 ausgehend von ihrer horizontalen Ausgangslage vor dem Zylinderspiegel 16 um insgesamt 45° gedreht. Mit dieser, in Fig. 6 dargestellten Ausrichtung seiner Polarisationsebene wird der Laserstrahl 13 von dem Zylinderspiegel 17 auf den Zylinderspiegel 18 reflektiert. Die Achse des Zylinderspiegels 18 sowie die Öffnung des diesem vorgesetzten Raumfilters 20 verlaufen senkrecht zueinander und sind unter einem Winkel von 45° gegen die Horizontale bzw. die Vertikale geneigt.

Von dem Zylinderspiegel 18 wird der einfallende Laserstrahl 13 auf den nachgeschalteten Zylinderspiegel 19 reflektiert. Die in Fig. 6 strichpunktiert angedeutete Reflexionsebene des Zylinderspiegels 18 verläuft dabei in der Horizontalen und somit unter einem Winkel von 45° gegenüber der Polarisationsebene des von dem Zylinderspiegel 17 auf den Zylinderspiegel 18 gelenkten Laserstrahls 13.

Der Zylinderspiegel 18 ist mit einer dielektrischen Schicht versehen. Diese dielektrische Schicht versetzt den Zylinderspiegel 18 in die Lage, bei der ausweislich Fig. 6 gegebenen Ausrichtung der Polarisationsebene des an dem Zylinderspiegel 18 einfallenden Laserstrahls 13 gegenüber der Reflexionsebene des Zylinderspiegels 18 die Phasenlage des s-polarisierten Teilstrahls des Laserstrahls 13 gegenüber dessen p-polarisiertem Teilstrahl um ein Viertel Wellenlänge zu verschieben und dadurch den vor dem Zylinderspiegel 18 linear polarisierten Laserstrahl 13 zirkular zu polarisieren.

Zirkular polarisiert trifft der Laserstrahl 13 auf den Zylinderspiegel 19 auf, dessen Achse ebenfalls um 45° gegen die Horizontale bzw. die Vertikale geneigt verläuft. Von dem Zylinderspiegel 19 wird der Laserstrahl 13 dann zu einer Fokussiereinrichtung an einer der Laseranordnung 1 zugehörigen Bearbeitungsstation gelenkt. In bekannter Weise wird der Laserstrahl 13 abschließend mittels der genannten Fokussiereinrichtung auf die Bearbeitungsstelle an dem zu bearbeitenden Werkstück gebündelt.

In Fig. 5 anschaulich dargestellt ist die Aufweitung, welche der Laserstrahl 13 auf seinem Weg über die Zylinderspiegel 16, 17, 18, 19 erfährt. Neben der strahlteleskoptypischen Aufweitungsfunktion übernehmen dabei die Zylinderspiegel 16, 17 die definierte Ausrichtung der Polarisationsebene des linear polarisierten Laserstrahls 13 gegenüber dem Zylinderspiegel 18 und der Zylinderspiegel 18 die Funktion einer Verzögerungsplatte bzw. eines Phasenschiebers. Der Zylinderspiegel 19 des Strahlteleskopes 14 dient ausschließlich zur Strahlumlenkung und -aufweitung. Ausschließlich die letztgenannten Funktionen könnte alternativ auch der Zylinderspiegel 18 übernehmen. Der Zylinderspiegel 19 wäre dann als Verzögerungs- bzw. λ/4-Platte auszubilden.

## Patentansprüche

1. Laseranordnung für die Materialbearbeitung mit einer Einrichtung (2, 12) zur Erzeugung eines linear polarisierten Laserstrahls (3, 13), mit wenigstens einer Verzögerungsplatte (5, 18) zur Erzeugung eines polarisierten Laserstrahls (3, 13) mit rotierendem Polarisationsvektor, insbesondere zur elliptischen oder zirkularen Polarisation des Laserstrahls (3, 13), sowie mit einer Einrichtung (4, 14) zur Formung des Laserstrahls (3, 13) mit wenigstens einem optischen Element (6, 7; 16, 17, 18, 19) zur Strahlformung, wobei der Verzögerungsplatte (5, 18) im Strahlengang des Laserstrahls (3, 13) zumindest ein optisches Element (6, 7; 16, 17) vorgeschaltet ist und die Verzögerungsplatte (5, 18) sowie die Polarisationsebene des auf diese auftreffenden linear polarisierten Laserstrahls (3, 13) relativ zueinander definiert ausgerichtet sind, **dadurch gekennzeichnet, dass** wenigstens ein optisches Element (18) zur Strahlformung als Verzögerungsplatte (18) und/ oder dass wenigstens ein optisches Element (6, 7; 16, 17) zur Strahlformung als der Verzögerungsplatte (5, 18) vorgeschaltetes und die Polarisationsebene des linear polarisierten Laserstrahls (3, 13) gegenüber der Verzögerungsplatte (5, 18) definiert ausrichtendes optisches Element ausgebildet ist.

2. Laseranordnung nach Anspruch 1, **dadurch gekennzeichnet, dass** als der Verzögerungsplatte (18) vorgeschaltete und die Polarisationsebene des linear polarisierten Laserstrahls (13) gegenüber der Verzögerungsplatte (18) definiert ausrichtende optische Elemente zur Strahlformung zwei einander im Strahlengang des Laserstrahls (13) benachbarte optische Elemente (16, 17) vorgesehen sind, mittels welcher der an dem im Strahlengang ersten optischen Element (16) einfallende linear polarisierte Laserstrahl (13) U-förmig umlenkbar ist, wobei der U-förmige Teil des Laserstrahls (13) in einer Ebene liegt, die mit der Senkrechten auf die Polarisationsebene des Laserstrahls (13) vor dem ersten optischen Element (16) einen Winkel von 22,5° einschließt und wobei die Polarisationsebene des von dem im Strahlengang zweiten optischen Element (17) auf die Verzögerungsplatte (18) gerichteten Laserstrahls (13) nach dem zweiten optischen Element (17) unter einem Winkel von 45° gegen die Reflexionsebene der Verzögerungsplatte (18) geneigt ist.

3. Laseranordnung nach einem der vorhergehenden Ansprüche, **dadurch gekennzeichnet, dass** als der Verzögerungsplatte (5, 18) vorgeschaltete und die Polarisationsebene des linear polarisierten Laserstrahls (3, 13) gegenüber der Verzögerungsplatte (5, 18) definiert ausrichtende optische Elemente (6, 7; 16, 17) zur Strahlformung Spiegel (6, 7; 16, 17) vorgesehen sind.

4. Laseranordnung nach einem der vorhergehenden Ansprüche, **dadurch gekennzeichnet, dass** die der Verzögerungsplatte (5) vorgeschalteten und die Polarisationsebene des linear polarisierten Laserstrahls (3) gegenüber der Verzögerungsplatte (5) definiert ausrichtenden Spiegel (6, 7) als sphärische Spiegel (6, 7) ausgebildet sind.

5. Laseranordnung nach einem der vorhergehenden Ansprüche, **dadurch gekennzeichnet, dass** ein Spiegel (18) zur Strahlformung als Verzögerungsplatte (18) ausgebildet ist.

## Claims

1. Laser arrangement for material machining with a device (2, 12) for producing a linearly polarised laser beam (3, 13), with at least one delay plate (5, 18) for producing a polarised laser beam (3, 13) with a rotating polarisation vector, in particular for the elliptic or circular polarisation of the laser beam (3, 13), as well as with a device (4, 14) for shaping the laser beam (3, 13) with at least one optical element (6, 7; 16, 17, 18, 19) for beam shaping, wherein at least one optical element (6, 7; 16, 17) is connected upstream of the delay plate (5, 18) in the beam path of the laser beam (3, 13), and the delay plate (5, 18) as well as the plane of polarisation of the linearly polarised laser beam (3, 13) impinging upon the latter are oriented in a defined manner relative to one another, **characterised in that** at least one optical element (18) for beam shaping is formed as a delay plate (18), and/or that at least one optical element (6, 7; 16, 17) for beam shaping is formed as an optical element which is connected upstream of the delay plate (5, 18) and orients the plane of polarisation of the linearly polarised laser beam (3, 13) in a defined manner with respect to the delay plate (5, 18).

2. Laser arrangement according to Claim 1, **characterised in that** two optical elements (16, 17), which are adjacent to one another in the beam path of the laser beam (13), are provided as optical elements for beam shaping which are connected upstream of the delay plate (18) and orient the plane of polarisation of the linearly polarised laser beam (13) in a defined manner with respect to the delay plate (18), by means of which optical elements the linearly polarised laser beam (13), which is incident at the'optical element (16) first in the beam path, can be deflected in a U-shaped manner, wherein the U-shaped part of the laser beam (13) lies in a plane which forms an angle of 22.5° with the perpendicular onto the plane of polarisation of the laser beam (13) before the first optical element (16), and wherein the plane of polarisation of the laser beam (13) directed by the optical element (17) second in the beam path onto the delay plate (18) is inclined at an angle of 45° to the plane of reflection of the delay plate (18) after the second optical element (17).

3. Laser arrangement according to any one of the preceding Claims, **characterised in that** mirrors (6, 7; 16, 17) are provided as optical elements (6, 7; 16, 17) for beam shaping which are connected upstream of the delay plate (5, 18) and orient the plane of polarisation of the linearly polarised laser beam (3, 13) in a defined manner with respect to the delay plate (5, 18).

4. Laser arrangement according to any one of the preceding Claims, **characterised in that** the mirrors (6, 7) which are connected upstream of the delay plate (5) and orient the plane of polarisation of the linearly polarised laser beam (3) in a defined manner with respect to the delay plate (5) are formed as spherical mirrors.

5. Laser arrangement according to any one of the preceding Claims, **characterised in that** one mirror (18) for beam shaping is formed as a delay plate (18).

## Revendications

1. Agencement laser pour l'usinage de matériaux comprenant un dispositif (2, 12) pour produire un rayon laser à polarisation linéaire (3, 13), au moins une plaque de décélération (5, 18) pour produire un rayon laser polarisé (3, 13), avec vecteur de polarisation rotatif en particulier pour la polarisation elliptique ou circulaire du rayon laser (3, 13), ainsi qu'un dispositif (4, 14) pour former le rayon laser (3, 13) avec au moins un élément optique (6, 7 ; 17, 18, 19) pour former le rayon, au moins un élément optique (6, 7 ; 16, 17) étant monté dans la trajectoire optique du rayon laser (3, 13) avant la plaque de décélération (5, 18) et la plaque de décélération (5, 18) ainsi que le plan de polarisation du rayon laser (3, 13) à polarisation linéaire qui arrive sur celle-ci étant orientés de manière définie relativement l'un à l'autre, **caractérisé en ce qu'**au moins un élément optique (18) pour former le rayon est conçu comme une plaque de décélération (18) et/ou qu'au moins un élément optique (6, 7 ; 16, 17) pour former le rayon est conçu comme un élément optique monté avant la plaque de décélération (5, 18) et orientant de manière définie le plan de polarisation du rayon laser à polarisation linéaire (3, 13) par rapport à la plaque de décélération (5, 18).

2. Agencement de laser selon la revendication 1, **caractérisé en ce que**, comme éléments optiques montés avant la plaque de décélération (18) et orientant de manière définie le plan de polarisation du rayon laser à polarisation linéaire (13) par rapport à la plaque de décélération (18), destinés à former le rayon, deux éléments optiques (16, 17) voisins l'un de l'autre dans la trajectoire de rayon du rayon laser (13) sont prévus, au moyen desquels le rayon laser à polarisation linéaire (13) qui arrive sur le premier élément optique (16) dans la trajectoire de rayon peut être dévié en forme de U, la partie en forme de U du rayon laser (13) étant située dans un plan qui forme avec la perpendiculaire au plan de polarisation du rayon laser (13) avant le premier élément optique (16) un angle de 22,5° et le plan de polarisation du rayon laser (13) orienté par le deuxième élément optique (17) dans la trajectoire du rayon sur la plaque de décélération (18) étant incliné après le deuxième élément optique (17) en formant un angle de 45° par rapport au plan de réflexion de la plaque de décélération (18).

3. Agencement de laser selon l'une quelconque des revendications précédentes, **caractérisé en ce qu'**il est prévu des miroirs (6, 7 ; 16, 17) comme éléments optiques (6, 7 ; 16, 17) pour former le rayon, montés avant la plaque de décélération (5, 18) et orientant de manière définie le plan de polarisation du rayon laser à polarisation linéaire (3, 13) par rapport à la plaque de décélération (5, 18).

4. Agencement de laser selon l'une quelconque des revendications précédentes, **caractérisé en ce que** les miroirs (6, 7) montés avant la plaque de décélération (5) et orientant de manière définie le plan de polarisation du rayon laser (3) à polarisation linéaire par rapport à la plaque de décélération (5) sont conçus comme des miroirs sphériques (6, 7).

5. Agencement de laser selon l'une quelconque des revendications précédentes, **caractérisé en ce qu'**un miroir (18) pour former le rayon est conçu comme une plaque de décélération (18).
